# EUROPÄISCHE PATENTSCHRIFT

(11) **EP 1 923 268 B1**
(45) Veröffentlichungstag und Bekanntmachung des Hinweises auf die Patenterteilung: **16.06.2010**
(21) Anmeldenummer: 08002644.6
(22) Anmeldetag: 23.09.2005
(51) Int. Cl.: B60R 5/00

(54) **Kraftfahrzeug mit crashsicherer Halterung der Transportbehälter-Einrichtung**
Motor vehicle with crash proof function cartridge
Véhicule automobile doté d'une fixation anti-collision de l'insert

(30) Priorität: 24.03.2005 DE 102005013630
(43) Veröffentlichungstag der Anmeldung: 21.05.2008
(62) Teilanmeldung aus: 05020762.0
(73) Patentinhaber: BOS GmbH & Co. KG, 73760 Ostfildern (DE)
(72) Erfinder: Sitzler, Wolfgang, 42111 Wuppertal (DE); Bohlke, Hartmut, 42369 Wuppertal (DE); Salewski, Jürgen, 40599 Düsseldorf (DE)
(74) Vertreter: Rüger, Barthelt & Abel Patentanwälte

(56) Entgegenhaltungen:
- EP-A- 1 642 777
- DE-A1- 10 132 081

## Beschreibung

Bei der Unterbringung von Skiern im Kraftfahrzeug hat es sich durchgesetzt, in der Rücksitzlehne eine Öffnung vorzusehen, durch die hindurch die Skier vom Kofferraum her geladen werden. Die Skier ragen bei dieser Unterbringungsform zum Teil in den Fahrgastraum hinein.

Damit die Skier im Fahrgastraum sicher gehalten sind und auch im Crashfall keine Personen verletzten können, wird ein Skisack verwendet, der in der Öffnung der Rücksitzlehne verankert ist.

Um die Flexibilität zu erhöhen, kann bei Bedarf der Skisack aus der Rückenlehnenstruktur entnommen werden. Hierzu enthält die Rückenlehnenstruktur einen Aufnahmeraum mit einer Einstecköffnung, in die eine Funktionsbox einsetzbar ist, die den Skisack umfasst.

Die Funkticnsbox besteht aus einem Rahmen, an dessen Innenseite der skisack befestigt ist. Außerdem umfasst die Funktionsbox Deckel, um den Rahmen gehäuseartig zu verschließen, damit darin der Skisack verstaut aufbewahrt werden kann.

Zur Verrieglung des Skisackmoduls ist es ferner bekannt in dem Rahmen starre und bewegliche Klinken vorzusehen.

Im Falle eines Crashs belasten die in Fahrtrichtung drängenden Skier den Skisack und die Verankerung des zugehörigen Rahmens im Aufnahmeraum der Rücksitzlehne. Der Rahmen erfährt dabei eine Gestaltsänderung, die dazu führt dass unter Umständen die Verrieglungsklinken frei kommen.

Die DE 101 32 081 A1 zeigt ein Kraftfahrzeug, in dessen Karosserie eine Fassungsanordnung vorgesehen ist, die einen Rahmen aufweist. Der Rahmen umgrenzt einen Aufnahmeraum, der über eine Einstecköffnung zugänglich ist. In dem Aufnahmeraum kann ein Funktionseinsatz in Gestalt eines Behälters für einen Skisack eingesetzt werden. Zur Halterung dieses Einsatzes sind in dem Rahmen im unteren Bereich zwei L-förmig abgewinkelte und nach unten verschlossene Nuten vorgesehen. Die Nuten befinden sich auf gleicher Höhe. Sie dienen dem Einhängen von Zapfen, die in diesem Bereich an dem Funktonseinsatz vorgesehen sind.

An der oberen Kante weist der Funktionseinsatz eine bewegliche Rastklinke auf, die in eine entsprechende Falle am Rahmen eingreifen kann.

Wenn bei einem Crash, der an der Zarge des Funktionseinsatzes befestigte Skisack auf Zug belastet wird, zeigt die Zarge, wie oben beschrieben, deutliche Einschnürungen und wird sich in der Länge verkürzen. Durch die Verkürzung kann die Klinke aus der Falle frei kommen und der Funktionseinsatz aus der Fassungsanordnung herausgeschleudert werden.

Ausgehend hiervon ist es Aufgabe der Erfindung ein Personenkraftfahrzeug zu schaffen, bei dem der Funktionseinsatz weitgehend crashsicher gehalten ist.

Diese Aufgabe wird erfindungsgemäß mit einer Anordnung mit den Merkmalen des Anspruches 1.

Die crashsichere Verankerung kommt ausschließlich durch passive, unbewegliche Teile zustande.

Im Falle eines Crashs hat sich gezeigt, dass rahmenartigen Konstruktionen bei der Belastung dazu neigen, dass sich die vertikal verlaufenden längeren seitlichen Wände nennenswert aufeinander zu bewegen. Der Rahmen schnürt sich gleichsam mittig ein. Die Folge der seitlichen Einschnürung ist eine Verkürzung in vertikalrichtung, was dazu führt, dass die Klinken an der oberen und/oder der unteren Schmalseite aus den Rastöffnungen freikommen können.

Um diese Effekte zu verhindern oder die schädlichen Auswirkungen abzumildern ist in der Karosserie eine Fassungsanordnung vorgesehen, die einen Rahmen aufweist. Der Rahmen umgrenzt einen Aufnahmeraum für den Funktionseinsatz. Der Aufnahmeraum ist wenigstens von einer Seite über eine Einstecköffnung zugänglich, um den Funktionseinsatz in den Aufnahmeraum bringen zu können.

Der Rahmen des Aufnahmeraums enthält von der Einstecköffnung ausgehende gerade Nuten mit einer Nutenkammer und einem Nutenschlitz, wobei die lichte Weite der Nutenkammer größer ist als die des Nutenschlitzes. Mit diesen beiden Nuten wirken zwei zapfen zusammen, die pilzartig gestaltet sind.

Die Nuten und die Zapfen befinden sich vorzugsweise etwa auf der Mitte, bezogen auf die vertikale Erstreckung des Funktionseinsatzes und verhindern, dass bei einer Belastung eine Einschnürung des Funktionseinsatzes zustande kommt, mit der verheerenden Wirkung der Längenverkürzung.

Es leuchtet ohne weiteres ein, dass die Nuten und die pilzförmigen Zapfen auch ihre Plätze tauschen können.

Zusätzlich zu der horizontalen Nut kann eine abgewinkelten Nut vorhanden sein, die den Funktionseinsatz an dem von der Klinke abliegenden Ende fixiert, und zwar auch dann wenn sich der Funktionseinsatz einschnürt und verkürzt. Es ergibt sich hierdurch eine noch bessere Crashsicherheit.

Die betriebsmäßige Verrieglung umfasst im einfachsten Falle eine bewegliche Klinke, die in die Raststellung vorgespannt ist. Dadurch ist lediglich zum Entnehmen des Funktionseinsatzes eine willkürliche Betätigung der Klinke über einen Hebelmechanismus erforderlich. Das Einsetzen erfordert keinerlei zusätzliche Handhabung.

Aus Platzgründen ist der Aufnahmeraum weitgehend eng und stramm an die Außenabmessungen des Funktionseinsatzes angepasst.

Als Funktionseinsatz kommen alle möglichen Funktionseinsätze in Betracht, wie Skisäcke, Verbandskästen, Einsätze für Cup-Holder und dergleichen.

Im Übrigen sind Weiterbildungen der Erfindung Gegenstand von Unteransprüchen.

Beim Durchlesen der Figurenbeschreibung wird verständlich, dass eine Reihe von Abwandlungen möglich sind, die sich nach den jeweiligen technischen Anforderungen richten, und eine Reihe von Kombinationen möglich sind, die im Einzelnen nicht dargestellt sind, um den Umfang der Patentanmeldung nicht unnötig aufzublähen.

In der Zeichnung sind Ausführungsbeispiele des Gegenstandes der Erfindung dargestellt. Es zeigen:
- Fig. 1: den hinteren Teil eines Fahrgastraumes eines Pkw in einer teilweise aufgeschnittenen, vereinfachten perspektivischen Darstellung;
- Fig. 2: einen erfindungsgemäßen Funktionseinsatz in einer perspektivischen Ansicht auf die Vorderseite;

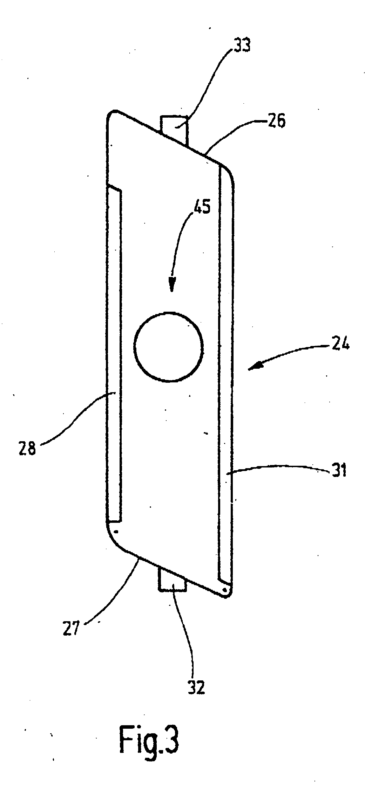

- Fig. 3: den Funktionseinsatz nach Fig. 2, in einer Seitenansicht und
- Fig. 4: die Fassungsanordnung für den Funktionseinsatz nach Fig. 2, in einer geschnittenen, perspektivischen Darstellung.

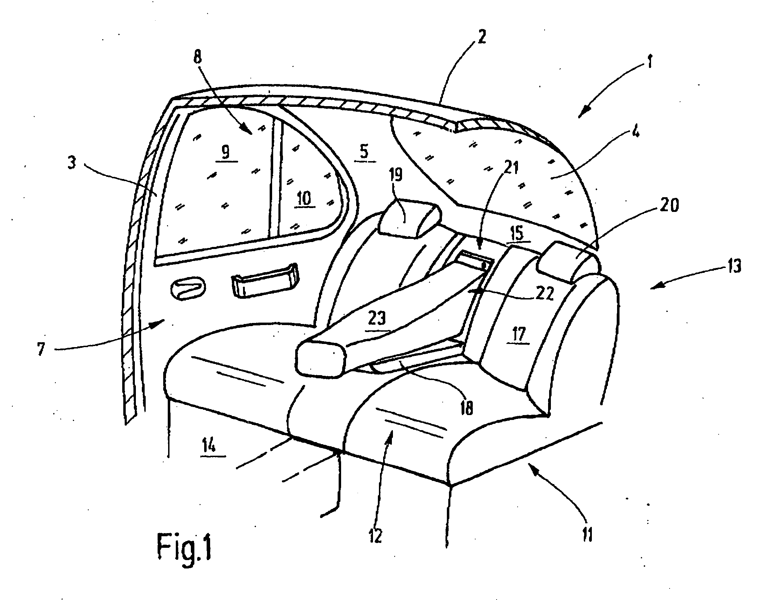

Fig. 1 stellt den aufgebrochenen abgeschnittenen Fondbereich eines Pkw dar. Die Figur veranschaulicht einen Blick auf die rechte Innenseite, die zu der nicht gezeigten linken Innenseite spiegelbildlich ist. Die Darstellung ist vereinfacht. So sind beispielsweise Karosserieinnenstrukturen wie Versteifungen und Befestigungsmittel nicht gezeigt, da ihre Darstellung für das Verständnis der Erfindung nicht erforderlich ist. Ebenso ist die Darstellung der Karosserie schematisiert und lässt die dort vorhandenen Hohlräume nicht erkennen.

Der veranschaulichte Karosserieabschnitt 1 weist ein Dach 2 auf, von dem seitlich eine B-Säule 3 nach oben zu einer nicht gezeigten Bodengruppe führt. Eine entsprechende B-Säule wäre auf der weggebrochenen Seite des Fahrzeugs zu denken. Das Dach 2 geht an seiner Hinterkante in ein Heckfenster 4 über. Seitlich endet das Heckfenster 4 an einer C-Säule 5, die sich im Abstand zu der B-Säule 3 befindet. Die C-Säule 5 trägt eine nicht weiter zu erkennende Innenverkleidung.

Zwischen der B-Säule 3 und der C-Säule 5 ist an der B-säule 3 eine hintere rechte Seitentür 7 in bekannter Weise anscharniert. Die Seitentür 7 enthält in bekannter Weise ein Fenster 8, das sich in einen versenkbaren Abschnitt 9 und einen dreieckförmigen starren Abschnitt 10 aufteilt.

Auf der Höhe der hinteren rechten Seitentür 7 befindet sich eine Rücksitzbank 11, zu der eine Sitzfläche 12 sowie eine Rücksitzlehne 13 gehören. Die Rücksitzfläche 12 liegt auf einer Sockelfläche 14, die zu der Bodengruppe gehört und in der Fußräume ausgebildet sind.

Knapp unterhalb der Oberkante der Rücksitzlehne 13 befindet sich eine Hutablage 15, die sich zu der Unterkante der Heckscheibe 4 erstreckt.

Die Rücksitzlehne 13 gliedert sich in einen rechten Rückenlehnenabschnitt 16 sowie einen linken Rückenlehnenabschnitt 17, die voneinander, wie gezeigt, ein Stück weit beabstandet sind. In diesem Zwischenraum befindet sich ein Rückenlehnenabschnitt 18, der an seiner Unterkante anscharniert ist und aus der gezeigten liegenden Stellung in eine hochgeklappte Stellung überführt werden kann, in der er die beiden Rückenlehnenabschnitte 16, 17 miteinander verbindet, um so einen dritten Notsitz zu schaffen. An der Oberkante der Rückenlehnenabschnitte 16 und 17 befinden sich Kopfstützen 19 und 20.

In dem normalerweise durch den mittigen Rückenlehnenabschnitt 18 verdeckten Bereich befindet sich eine Fassungsanordnung 21, in die ein Skisackmodul 22 eingesetzt ist. Die Fassungsanordnung 21 ist karosseriefest, beispielsweise in der Struktur für den rechten Rückenlehnenabschnitt 16 untergebracht, wie dies heute bei Kraftfahrzeugen üblich ist.

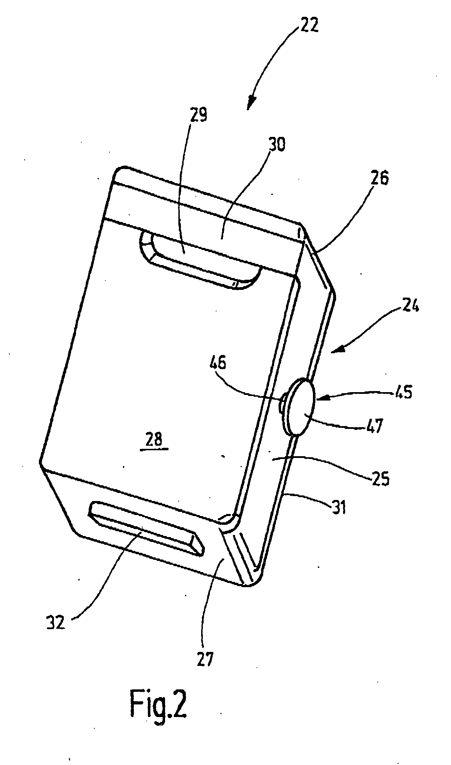

Das Skisackmodul 22 ist in Fig. 1 in der Gebrauchsstellung gezeigt, in der der dazugehörige Skisack 23 in den Innenraum des Pkws herausgezogen ist. Fig. 2 zeigt das Skisackmodul 22 in der Nichtgebrauchsstellung bzw. in der geschlossenen Stellung.

Wie aus Fig. 2 zu erkennen ist weist das Skisackmodul 22 ein etwa parallelepiped-förmiges Gehäuse 24 auf mit zwei zueinander parallelen langen Schmalseiten 25, von denen wegen der Darstellung lediglich eine zu erkennen ist, sowie zwei zueinander parallelen kurze Schmalseiten 26 und 27.

In der Seitenansicht auf die lange Schmalseite 25 hat das Gehäuse 24 eine parallelogrammförmige Gestalt.

Auf der vorderen Flachseite des Gehäuses 24 befindet sich ein an seiner Unterkante an der Schmalseite 26 anscharnierter Deckel 28 mit einer am oberen Ende vorgesehenen Griffmulde 29. Der Deckel 28 erstreckt sich lediglich ein Stück weit über die vordere Flachseite, um Platz zu schaffen für eine Griffleiste 30 zur Betätigung einer weiter unten erläuterten Verrieglungseinrichtung.

An der Rückseite befindet sich ein weiterer Deckel 31, der ebenfalls an seiner Unterkante bei der kurzen Schmalseite 27 anscharniert ist. Im Inneren des so begrenzten Gehäuses 24 befindet sich der zusammengefaltete Skisack 23.

Zum lösbaren Verankern des Skisackmoduls 22 in der Fassungsanordnung 21 weist das Gehäuse 24 an der unteren Schmalseite 27 eine starre Verriegelungsrippe 32 auf. An der oberen Schmalseite 26 ist beweglich eine Verriegelungsklinke 33 gelagert, die mit der Griffleiste 30 kinematisch verbunden ist. Durch ein Anheben der Griffliste 30 wird die Verriegelungsklinke 33 gegen die Wirkung einer nicht veranschaulichten Vorspannfeder hinter die Fläche der Schmalseite 26 zurückgezogen.

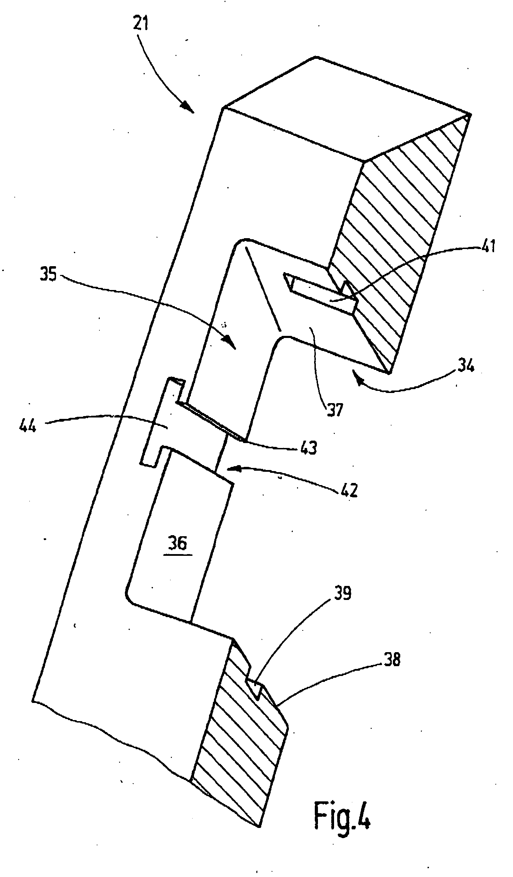

Fig. 4 zeigt die zugehörige Fassungsanordnung 21 in einem Längsschnitt. Der weggeschnittene Teil der Fassungsanordnung 21 ist spiegelbildlich zu denken und mit dem gezeigten Teil insoweit identisch.

Die Fassungsanordnung 21 bildet einen Aufnahmeraum 34, dessen Gestalt an die Gestalt des Gehäuses des Skisackmoduls 22 angepasst ist. Der Aufnahmeraum 34 ist aus dem Innenraum des Pkw über eine Einführungsöffnung 35 zugänglich, durch die hindurch das Skisackmodul 22 eingesetzt werden kann.

Außerdem ist der Aufnahmeraum 34 zum Kofferraum hin offen, damit von dort her die Skier eingesteckt werden können.

Der Aufnahmeraum 34 wird von zwei zueinander parallelen schmalen Längsseiten 36 seitlich begrenzt und nach oben und nach unten von zwei kurzen Schmalseiten 37 und 38.

In der unteren Schmalseite 38 befindet sich eine Ausnehmung 39, die mit der Verriegelungsrippe 32 zusammenwirkt, die an der unteren Schmalseite 27 des Gehäuses 24 vorgesehen ist.

Eine weitere taschenförmige Ausnehmung 41 ist in der oberen kurzen Schmalseite 36 enthalten..Diese taschenförmige Ausnehmung 41, die sich etwa über die Breite des Aufnahmeraums 23 erstreckt, wirkt mit der Rastklinke 33 zusammen. Diese Rastklinke 33 wird durch nicht gezeigte Federeinrichtungen im Sinne eines Einrastens in die Ausnehmung 41 vorgespannt. Mit Hilfe der Griffleiste 30 kann sie gegen die Wirkung der Feder zurückgezogen werden, um das Gehäuse 24 aus dem Aufnahmeraum 34 zu entnehmen zu können.

Wenn das mit dem gezeigten Skisackmodul 22 ausgerüstete Fahrzeug auf ein voraus fahrendes Fahrzeug auffährt, werden die in dem Skisack 23 enthaltenen Skier nach vorne geschleudert. Der Skisack 23 ist bestrebt, das Gehäuse 24 nach vorne aus der Fassungsanordnung 21 heraus zu reißen. Dies verhindert zunächst die Verriegelungsrippe 32 zusammen mit der Verriegelungsklinke 33. Da der Skisack 23 mit seiner Öffnung rings umlaufend an der Innenseite des Gehäuses 24 befestigt ist, werden die beiden langen Schmalseiten 25 nach innen aufeinander zu gezogen. Hierdurch entsteht eine Längenverkürzung des Gehäuses 24, mit der Gefahr, dass entweder die starre Verriegelungsrippe 32 oder die bewegliche Verriegelungsklinke 33 aus den zugehörigen Rastausnehmungen 39 und 41 freikommen.

Um eine solche Taillierung des Gehäuses 24 unter Last zu verhindern, ist in der langen Schmalseite 25 der Fassungsanordnung 21 eine hinterschnittene Nut 42 vorhanden. Die hinterschnittene Nut 42 setzt sich aus einem Nutenschlitz 43 und einer Nutenkammer 44 zusammen.

Wegen der Symmetrie der Anordnung ist eine ähnliche hintergriffene Nut 42 auf der gegenüberliegenden Seite vorgesehen. Jede Nut 42 wirkt mit einem pilzförmigen Zapfen 45 zusammen, der auf der betreffenden benachbarten langen Schmalseite 25 angeordnet ist.

Zu dem Zapfen 45 gehört ein Halsteil 46 sowie ein Kopf 47, der über dem Halsteil 46 mit dem Gehäuse 24 verbunden ist. Eine geeignete Bemessung des Durchmesser des Halsteils 46 sorgt für ein hinreichendes Spiel in dem Nutenschlitz 43, damit die Bewegung, die zum Einsetzen des Gehäuses 24 in den Aufnahmeraum 34 notwendig ist, nicht behindert oder blockiert wird. Insbesondere wird die erforderliche vertikalbewegung nicht blockiert, die notwendig ist, damit die Rippe 32 in die Rastnut 39 eindringen kann.

Der Durchmesser des Kopfes 45 ist hingegen so gewählt, dass der Kopf 47 bei eingesetztem Gehäuse 24, bezogen auf die Gebrauchsstellung, so in der Nutenkammer 44 sitzt, dass die Projektion des Nutenschlitzes 43 sowohl oberhalb als auch unterhalb des Halsteils 46 auf den Kopf 47 trifft.

Wenn die oben geschilderte Crashsituation eintritt, kann sich die betreffende lange Schmalseite 25 über den pilzförmigen Zapfen 45 in der Nut 42 abstützen. Die Taillierung wird nicht stattfinden und das Gehäuse 24 behält seine konstruktive Länge in Vertikalrichtung. Die Rippe 32 und die gegenüberliegende Rastklinke 33 werden nicht aus der Rastnut 39 bzw. 41 freikommen.

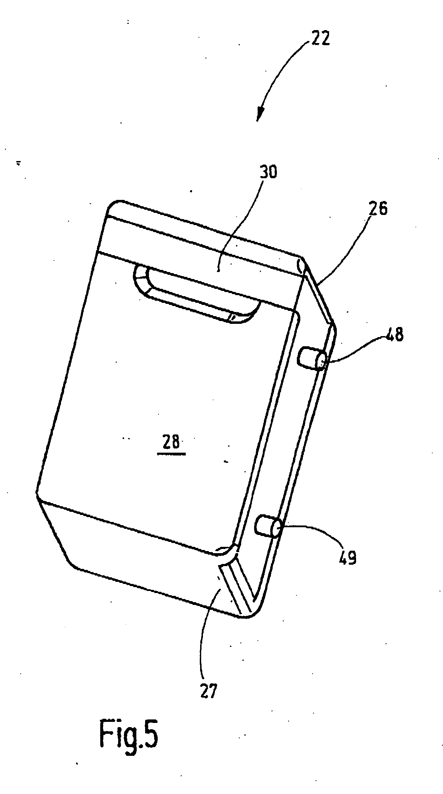

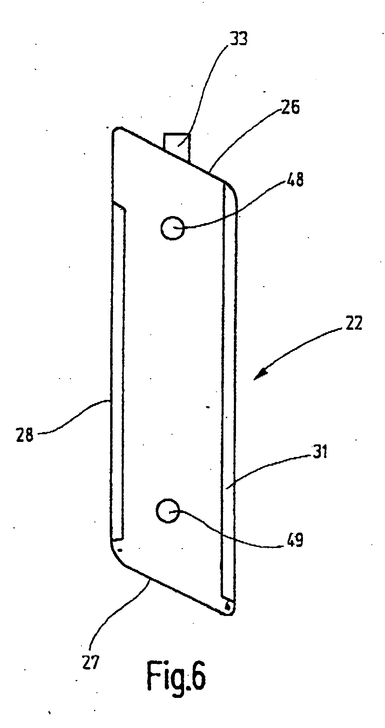

Die Figuren 5 bis 7 zeigen ein anderes Ausführungsbeispiel für eine crashsichere Verankerung einer Modulbox in einer Fassungsanordnung.

Die Modulbox nach Fig. 5 unterscheidet sich von der Modulbox 22 nach Fig. 2 durch das Fehlen der unteren Verriegelungsrippe 32. An Stelle des Zapfens 45 weist die Modulbox 22 nach Fig. 5 auf jeder langen Schmalseite 25 übereinander zwei zylindrische Zapfen 48 und 49 auf. Die beiden zylindrischen Zapfen 48 und 49 befinden sich, bezogen auf die Dicke, etwa in der Mitte zwischen der vorder- und der Rückseite. Der Zapfen 48 ist in der Nähe der oberen Schmalseite 26 und der Zapfen 49 in der Nähe der unteren Schmalseite 27 angeordnet.

An diese Gestaltung ist die Aufnahmeeinrichtung 21 angepasst. In den beiden einander gegenüberstehenden langen Schmalseiten 36 sind übereinander zwei Nuten 50 und 51 ausgebildet. Beide Nuten sind hinterschneidungsfrei. Die Nut 50 verläuft etwa horizontal, d,h. rechtwinkelig zu der durch die Einstecköffnung 35 definierten Ebene. Die Nut 50 ist im Querschnitt rechteckig mit zueinander parallelen Nutenwänden 52.

Die darunter befindliche Nut 51 ist abgewinkelt. Sie setzt sich aus einem ersten Nutenabschnitt 55 und einem zweiten Nutenabschnitt 56 zusammen. Der Nutenabschnitt 55 mündet in die dem Betrachter zugekehrte Vorderseite der Aufnahmeeinrichtung, d.h. in dieselbe Richtung, wie die Einstecköffnung 35 durch die hindurch die Modulbox 22 in den Aufnahmeraum 34 einzusetzen ist. Der Nutenabschnitt 55 verläuft etwa rechtwinklig zu der durch die Einstecköffnung 35 definierten Ebene.

An der entsprechenden Stelle der der Lage des Zapfens 49 entspricht, wenn die Modulbox 22 fast vollständig eingesetzt ist, geht der Nutenabschnitt 55 in den Nutenabschnitt 56 über. Der Nutenabschnitt 56 ist bei 57 geschlossen und führt etwa parallel zu der Ebene der Einführungsöffnung 35 nach unten. Der Nutenabschnitt 56 verläuft damit etwa vertikal, bzw senkrecht zur Crashkraft.

Die genaue Dimensionierung und Lage der beiden Nuten 50 und 51 ergibt sich implizit aus der nachfolgenden Funktionsbeschreibung.

Zum Einsetzen der Modulbox 22 wird diese mit den unteren Zapfen 49 voraus in die unteren Nuten 51 eingefädelt. Im Laufe einer kombinierten Schiebe- und Schwenkbewegung gelangen auch die oberen Zapfen 48 in die miteinander fluchtenden oberen Nuten 50. Im Verlauf der weiteren Einsteckbewegung in den Aufnahmeraum 34 wird schließlich die Rastklinke 33 längs der oberen Schmalseite 37 entlang gleiten, bis sie in der Rastnut 51 verrastet. In dieser Endstellung verläuft die untere Schmalseite 27 der Modulbox 32 parallel und im Abstand zu der unteren Schmalseite 38 des Aufnahmeraums 34, oder sie steht auf dieser auf. Soweit sie nicht aufsteht, bildet sie lediglich einen schmalen Spalt. In dieser nicht aufstehenden Position wird sie gehalten, indem die Zapfen 48 auf der unteren Nutenwand 52 der Nut 50 aufliegt. Die Modulbox 22 hängt gleichsam an den oberen Zapfen 48. Im unteren Bereich wird sie in Richtung senkrecht zu der Einstecköffnung 35 durch die Zapfen 49 geführt, die in dem Nutenabschnitt 56 enthalten sind.

Sollte hingegen die Modulbox 22 auf der Schmalseite 38 des Aufnahmeraums 34 aufstehen, ist der Abstand zwischen der unteren Nutenwand 52 und dem zugehörigen Zapfen 48 so klein, dass sich die weiter unten stehende Wirkung ergibt. Sollte mit einem Kraftfahrzeug, das mit der erfingungsgemäßen Modulbox 22 und der zugehörigen Fassungseinrichtung 21 ausgestattet ist, zu einem Auffahrunfall kommen, bei dem die Skier in dem Skisack 23 nach vorne geschleudert werden, tritt die oben ausführlich erläuterte Taillierung ein, d.h. die beiden langen Schmalseite 25 werden in Richtung aufeinander zu verformt. Hierbei verkürzt sich der Abstand zwischen den beiden kurzen Schmalseiten 26 und 27.

Der hierdurch hervorgerufene Breitenschwund ist kleiner als es der Eintauchtiefe des Zapfen 49 in die Nuten 51 entspricht. Sie werden in den Nuten 51 in Eingriff bleiben.

Da sich die oberen Zapfen 48 in einem kurzen Abstand von der oberen Schmalseite 26 befindet, wird sich die Längenverkürzung der Modulbox 22 praktisch nicht auf den Abstand zwischen den Zapfen 48 und der oberen Schmalseite 26 auswirken. Da die oberen Zapfen 48 in einem geringen Abstand zu der unteren Nutenwand 52 stehen bzw. an dieser anliegen, sorgen die Zapfen 48, zusammen mit der Nutenwand 52 dafür, dass die verkürzung nicht dazu führt, dass die Rastklinke 33 aus der Rastnut 41 freikommen kann. Die Zapfen 48 halten die obere Schmalseite 26 der Modulbox 22 in dem konstruktiv vorgesehenen Abstand zu der Schmalseite 37 des Aufnahmeraums 34. Die Modulbox 22 bleibt am oberen Ende sicher verrastet. Zufolge der Gestaltung wird lediglich die untere Schmalseite 27 angehoben, was bewirkt, dass die unteren Zapfen 49 in den Nutenabschnitten 56 aufsteigen. Durch entsprechende Dimensionierung wird sichergestellt, dass auch bei der maximal zu erwartenden Verkürzung der Modulbox 22 in Höhenrichtung die unteren Zapfen 49 in dem zugehörigen Nutenabschnitten 56 bleiben, die in Richtung parallel zu der Einstecköffnung 35 verlaufen und somit ein Herausschwenken der Modulbox 22 um eine durch die Zapfen 48 definierte Drehachse wirksam verhindern.

Aus der Funktionsbeschreibung ergibt sich ferner, dass der oberen Nutenwand 52 beim Crash keine Funktion zukommt. Die weite der Nut 50 nach oben ist für die erfindungsgemäße Wirkung ohne Bedeutung.

Es ist unschwer zu erkennen, dass anstelle der zylindrischen Zapfen 48 und 49 auch pilzförmige Zapfen eingesetzt werden können. Schließlich ist es denkbar, zur weiteren Sicherung die zylindrischen Zapfen 48 und 49 mit einem mittig dazwischen angeordneten Zapfen 45 nach Fig. 2 zu kombinieren.

Die genaue Lage der Zapfen und ihre Dimensionierung ergibt sich empirisch aufgrund von Versuchen und Crashtests. Die Zeichnungen enthalten deswegen nur die schematische Prinzipdarstellung der Anordnung.

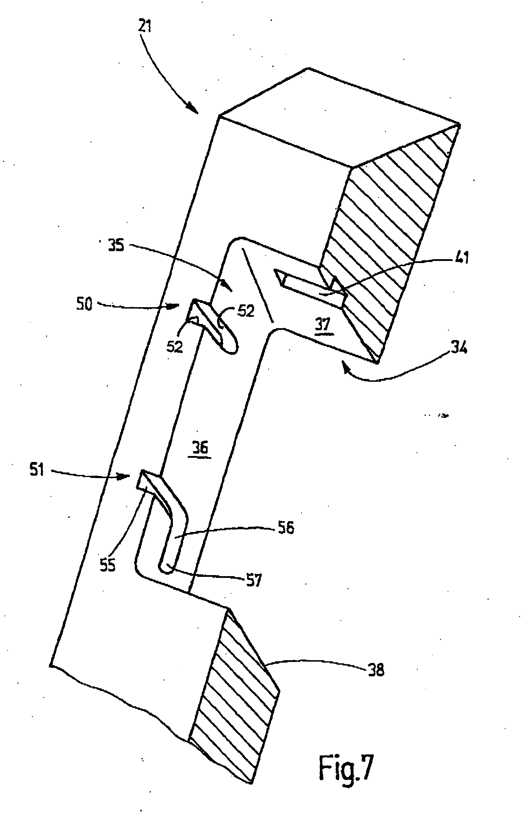

Für den Fachmann ist ferner unschwer zu erkennen, dass die Nuten und die Zapfen die Plätze tauschen können dergestalt, dass die Zapfen an der Innenseite des Aufnahmeraums und die Nuten in der Modulbox 22 vorgesehen sind. Die Wirkungsweise hinsichtlich der Crashsicherheit ist die gleiche. Lediglich bei der Ausführung ähnlich Fig. 7 käme es dann auf die obere Nutenwand 52 an, die in der Modulbox 22 enthalten wäre.

Eine Modulbox für Kraftfahrzeuge weist seitliche Zapfen auf, die in entsprechende Nuten im Aufnahmeraum der Fassungseinrichtung eingreifen. Mit Hilfe der Zapfen wird verhindert, dass die Modulbox im Crashfall aufgrund der Längenkontraktion durch Einschnürung der seitlichen Wände der Modulbox aus der Fassungseinrichtung freikommen kann.

## Patentansprüche

1. Kraftfahrzeug, insbesondere Personenkraftfahrzug,
mit einer Karosserie (1),
mit wenigstens einer Fassungsanordnung (21), die einen Rahmen aufweist, der einen Aufnahmeraum (34) umgrenzt, der über wenigstens eine von dem Rahmen umgrenzte Einstecköffnung (35) zugänglich ist und der zur Aufnahme und Halterung eines Funktionseinsatzes (22) vorgesehen ist,
mit einander gegenüber befindlichen Nuten (42), von denen jede sich aus einer Nutenkammer (44) und einem Nutenschlitz (43) zusammensetzt, dessen Weite kleiner ist als die weite der Nutenkammer (44), wobei sich die Nut (43) zumindest in derselben Richtung öffnet, in die auch die eine der wenigstens einen Einstecköffnung (35) zeigt,
mit einander gegenüber befindlichen Zapfen (45), von den jeder einen Halsteil (46) und einen Kopf (47) aufweist, wobei der Halsteil (46) an die Weite des Nutenschlitzes (43) und der Kopf (47) an die Weite der Nutenkammer (44) angepasst ist, und
mit Verriegelungsmitteln (32,33,39,41) zum Sichern des Funktionseinsatzes (22) in der Fassungsanordnung, (21).

2. Kraftfahrzeug nach Anspruch 1, **dadurch gekennzeichnet, dass** der Aufnahmeraum (34) eine lichte Weite aufweist, die im Wesentlichen der lichten Weite der Einstecköffnung (35) entspricht.

3. Kraftfahrzeug nach Anspruch 1, **dadurch gekennzeichnet, dass** der Aufnahmeraum (34) auf der der Einstecköffnung (35) gegenüberliegenden Seite geschlossen ist.

4. Kraftfahrzeug nach Anspruch 1, **dadurch gekennzeichnet, dass** der Aufnahmeraum (34) auf der der Einstecköffnung (35) gegenüberliegenden Seite eine rückseitige Öffnung aufweist.

5. Kraftfahrzeug nach Anspruch 4, **dadurch gekennzeichnet, dass** die rückseitige Öffnung eine lichte Weite aufweist, die zumindest angenähert der lichten Weite des Aufnahmeraums (34) entspricht.

6. Kraftfahrzeug nach Anspruch 5, **dadurch gekennzeichnet, dass** die rückseitige Öffnung im Wesentlichen dieselben Abmessungen aufweist wie die Einstecköffnung (34).

7. Kraftfahrzeug nach Anspruch 1, **dadurch gekennzeichnet, dass** die Weite des Nutenschlitzes (43) und der Nutenkammer (44) sowie der Durchmesser des Halsteils (46) und des Kopfs (47) derart aufeinander abgestimmt sind, dass der Funktionseinsatz (22) zum Einsetzen oder Herausnehmen aus der Fassungsanordnung (21) ein Stück weit in Richtung parallel zu der von der Einstecköffnung (35) definierten Ebene bewegbar ist, ohne dass der Kopf (47) aus der Nutenkammer (44) zu Gänze freikommt.

8. Kraftfahrzeug nach Anspruch 1, **dadurch gekennzeichnet, dass** die Verriegelungsmitteln (32,33,39,41) Verriegelungsmittel (39,41) an der Fassungsanordnung (21) und Verriegelungsmittel (32,33) an dem Funktionseinsatz (22) umfassen, die zueinander kompatibel sind.

9. Kraftfahrzeug nach Anspruch 1, **dadurch gekennzeichnet, dass** die Verriegelungsmittel (32,33,39,41) eine bewegliche Klinke (33) und eine damit zusammen wirkende. Öffnung (41) umfassen.

10. Kraftfahrzeug nach Anspruch 22, **dadurch gekennzeichnet, dass** die Verriegelungsmittel (32,33,39,41) einen unbeweglichen Fortsatz (32) und eine damit zusammen wirkende Öffnung (39) umfassen.

11. Kraftfahrzeug nach Anspruch 22, **dadurch gekennzeichnet, dass** der Funktionseinsatz (22) einen umlaufenden Rahmen (25,26,27) aufweist.

12. Kraftfahrzeug nach Anspruch 22, **dadurch gekennzeichnet, dass** der Funktionseinsatz (22) eine Funktionsbox ist.

13. Kraftfahrzeug nach Anspruch 22, **dadurch gekennzeichnet, dass** der Funktionseinsatz (22) einen Skisack (23) aufweist.

## Claims

1. Motor vehicle, in particular automobile,
with a body (1),
with at least one mounting arrangement (21), which has a frame surrounding a receiving area (34), which is accessible via at least one insertion opening (35) surrounded by the frame and is provided to receive and hold a function insert (22), with grooves (42) located opposite one another, each of which consisting of a groove chamber (44) and a groove slot (43), the width of which is smaller than the width of the groove chamber (44), wherein the groove (43) opens at least in the same direction, in which the at least one insert opening (35) points,
with pins (45) located opposite one another, each of which having a neck part (46) and a head (47), wherein the neck part (46) is adapted to the width of the groove slot (43) and the head (47) is adapted to the width of the groove chamber (44), and
with locking elements (32, 33, 39, 41) to secure the function insert (22) in the mounting arrangement (21).

2. Motor vehicle according to claim 1, **characterised in that** the receiving area (34) has an inside width, which substantially corresponds to the inside width of the insertion opening (35).

3. Motor vehicle according to claim 1, **characterised in that** the receiving area (34) is closed on the side opposite the insertion opening (35).

4. Motor vehicle according to claim 1, **characterised in that** the receiving area (34) has a rear opening on the side opposite the insertion opening (35).

5. Motor vehicle according to claim 4, **characterised in that** the rear opening has an inside width, which corresponds at least approximately to the inside width of the receiving space (34).

6. Motor vehicle according to claim 5, **characterised in that** the rear opening has substantially the same dimensions as the insertion opening (34).

7. Motor vehicle according to claim 1, **characterised in that** the width of the groove slot (43) and the groove chamber (44) and also the diameter of the neck part (46) and the head (47) are adapted to one another in such a manner that for insertion into or removal from the mounting arrangement (21), the function insert (22) is movable a short distance in a direction parallel to the plane defined by the insertion opening (35) without the head (47) releasing completely from the groove chamber (44).

8. Motor vehicle according to claim 1, **characterised in that** the locking elements (32, 33, 39, 41) comprise locking elements (39, 41) on the mounting arrangement (21) and locking elements (32, 33) on the function insert (22), which are compatible with one another.

9. Motor vehicle according to claim 1, **characterised in that** the locking elements (32, 33, 39, 41) comprise a movable catch (33) and an opening (41) cooperating therewith.

10. Motor vehicle according to claim 22?, **characterised in that** the locking elements (32, 33, 39, 41) comprise an immovable projection (32) and an opening (39) cooperating therewith.

11. Motor vehicle according to claim 22, **characterised in that** the function insert (22) has a circumferential frame (25, 26, 27).

12. Motor vehicle according to claim 22, **characterised in that** the function insert (22) is a function box.

13. Motor vehicle according to claim 22, **characterised in that** the function insert (22) is a ski bag (23).

## Revendications

1. Véhicule automobile, notamment véhicule de tourisme, dont la carrosserie comprend :
- au moins un système de support (21) qui présente un cadre entourant un espace d'accueil (31) qui est accessible à travers au moins une ouverture d'enfichage (35) délimitée par le cadre et qui est prévu pour accueillir et maintenir un insert fonctionnel (22),
- des rainures (42) se faisant face et composées chacune d'une chambre de rainure (44) et d'une fente de rainure (43) dont la largeur est inférieure à celle de la chambre (44), la rainure (42) s'ouvrant au moins dans la même direction que celle dans laquelle regarde également l'ouverture d'enfichage au nombre d'une au moins,
- des tenons (45) se faisant face et présentant chacun un col (46) et une tête (47), la largeur du col (46) étant adaptée à celle de la fente de rainure (43) tandis que la largeur de la tête (47) est adaptée à celle de la chambre de rainure (44),
- des moyens de verrouillage (32, 33, 39, 41) pour sécuriser l'insert fonctionnel (22) dans le système de support (21).

2. Véhicule automobile selon la revendication 1, **caractérisé en ce que** l'espace d'accueil (34) présente une largeur interne qui correspond essentiellement à celle de l'ouverture d'enfichage (35).

3. Véhicule automobile selon la revendication 1, **caractérisé en ce que** l'espace d'accueil (34) est fermé du côté opposé à l'ouverture d'enfichage (35).

4. Véhicule automobile selon la revendication 1, **caractérisé en ce que** l'espace d'accueil (34) présente sur le côté opposé à l'ouverture d'enfichage une ouverture vers l'arrière.

5. Véhicule automobile selon la revendication 4, **caractérisé en ce que** l'ouverture vers l'arrière présente une largeur intérieure qui correspond au moins à peu près à celle de l'espace d'accueil (34).

6. Véhicule automobile selon la revendication 5, **caractérisé en ce que** l'ouverture vers l'arrière présente essentiellement les même dimensions que l'ouverture d'enfichage (34).

7. Véhicule automobile selon la revendication 1, **caractérisé en ce que** la largeur de la fente de rainure (43) et celle de la chambre de rainure (44) ainsi que le diamètre du col (46) et de la tête (47) sont accordés les uns aux autres de manière que l'insert fonctionnel (22), quand il s'agit de l'introduire ou de le retirer du système de support (21), peut être déplacé un peu selon une direction parallèle au plan défini par l'ouverture d'enfichage (35) sans que la tête (47) se dégage entièrement de la chambre de rainure (44).

8. Véhicule automobile selon la revendication 1, **caractérisé en ce que** les moyens de verrouillage (32, 33, 39, 41) comprennent sur le système de support (21) des moyens de verrouillage (39, 41) et sur l'insert fonctionnel (22) des moyens de verrouillage qui sont compatibles entre eux.

9. Véhicule automobile selon la revendication 1, **caractérisé en ce que** les moyens de verrouillage (32, 33, 39, 41) présentent un cliquet (33) mobile et, coopérant avec lui, une ouverture (41).

10. Véhicule automobile selon la revendication 8, **caractérisé en ce que** les moyens de verrouillage (32, 33, 39, 41) présente un appendice (32) fixe et, coopérant avec celui-ci, une ouverture (39).

11. Véhicule automobile selon la revendication 8, **caractérisé en ce que** l'insert fonctionnel (22) présente un cadre périphérique (25, 26,27).

12. Véhicule automobile selon la revendication 8, **caractérisé en ce que** l'insert fonctionnel (22) est un boîtier fonctionnel.

13. Véhicule automobile selon la revendication 8, **caractérisé en ce que** l'insert fonctionnel (22) est un sac de ski (23).
